Europäisches Patentamt

European Patent Office

Office européen des brevets

(11) Veröffentlichungsnummer: **0 120 197**
**A1**

(12) # EUROPÄISCHE PATENTANMELDUNG

(21) Anmeldenummer: 84100474.0

(22) Anmeldetag: 18.01.84

(51) Int. Cl.³: **B 25 J 19/00**

(30) Priorität: 26.02.83 DE 3306888

(43) Veröffentlichungstag der Anmeldung:
03.10.84 Patentblatt 84/40

(84) Benannte Vertragsstaaten:
AT BE CH DE FR GB IT LI NL SE

(71) Anmelder: Gesellschaft für digitale Automation mbH
Lützelsteiner Strasse 1
D-8000 München 45(DE)

(72) Erfinder: Peyr, Franz
Dom-Pedro-Strasse 6
D-8000 München 19(DE)

(74) Vertreter: Goddar, Heinz J., Dr. et al,
FORRESTER & BOEHMERT Widenmayerstrasse 4/I
D-8000 München 22(DE)

(54) Verfahren und Vorrichtung zum Erfassen und Kompensieren der Bahnabweichung eines Industrieroboters.

(57) Verfahren zum Erfassen und Kompensieren der Bahnabweichung eines Industrieroboters unter Dartellen einer Nrombewegungsbahn (5) des Werkzeugflansches auf einer Fläche (6), Ausrichten eines auf den Werkzeugflansch (2) montierten opto-elektronischen Sensors (3) auf die Fläche (6), Führen des Werkzeugflansches (2) mit dem daran montierten opto-elektronischen Sensors (3) entsprechend dem vorgegebenen Soll-Bahnprogramm und Speichern der sich als Abweichung der Abbildung der dargestellten Sollbewegungsbahn im opto-elektronischen Sensor (3) von dessen Mittelpunkt ergebenden Bahnabweichung des Werkzeugflansches (2) sowie eine Vorrichtung zur Durchführung dieses Verfahrens.

FIG.1

EP 0 120 197 A1

GdA Gesellschaft für digitale Automation mbH,
Lützelsteiner Str. 1, 8000 München 45

---

Verfahren und Vorrichtung zum Erfassen und Kompensieren
der Bahnabweichung eines Industrieroboters

---

Die Erfindung betrifft ein Verfahren und eine Vorrichtung zum Erfassen und Kompensieren der Bahnabweichung
eines Industrieroboters.

Hauptsächlich an Arbeitsplätzen, die durch Monotonie,
Lärm, Schmutz, Erschütterung, Hitze usw. gekennzeichnet
sind, finden zunehmend flexibel automatisierte Einrichtungen zur Werkstück- und/oder Werkzeughandhabung in
automatisierten Fertigungsabläufen Verwendung. Vor allem den flexiblen Handhabungsgeräten, also in mehreren Bewegungsachsen frei programmierbaren Handhabungsgeräten, die aufgrund ihrer Anpassungsfähigkeit in einer Fertigung die unterschiedlichsten Aufgaben übernehmen können, kommt eine wachsende Bedeutung zu. Derartige Handhabungsgeräte werden zunehmend theoretisch, also beispielsweise über CAD/CPM programmiert.

Derartige Industrieroboter bestehen im allgemeinen aus den Baugruppen Antrieb, Steuerung, Kinematik, Greifer und evt. Sensoren. Da die einzelnen Bewegungsmittel des Industrieroboters aus einer Vielzahl von Gliedern bestehen, läßt sich nicht ausschließen, daß vor allem bei Gelenkrobotern aufgrund der Herstellungstoleranzen, Abnutzungen, Verschiebungen oder bei dem Auswechseln von Einzelteilen aufgrund von Fertigungstoleranzen die einzelnen Bauteile die Null-Justierung nicht exakt eingehalten wird. Weiter stellt sich das Problem, daß bei Austauschen des gesamten Industrieroboters das neue Gerät, insbesondere dessen Werkzeugflansch, exakt so justiert sein muß wie das zu ersetzende, was technisch und wirtschaftlich problematisch ist und deshalb ein Anpassen des Steuerprogramms an die neuen Gegebenheiten erforderlich machte und daher technisch relativ aufwendig war.

Hinzu kommt, daß nicht jeder Industrieroboter an seinem Werkzeugflansch oder in seinen einzelnen Gliedern die exakt gleichen Abmaße hat, was eine theoretische Programmierung über CPD/CAM System unmöglich macht, was auch dann gilt, wenn die Abweichung des Werkzeugflansches zu einem Bezugssollwert oder die Abweichung jedes einzelnen Gliedes nicht bekannt ist.

Das Justieren eines Industrieroboters bei der Herstellung und etwa nach dem Auswechseln eines Einzelteiles,
das sich wegen Fertigungstoleranzen von dem gefertigten
ausgewechselten Teil unterscheidet, ist problematisch,
da der Werkzeugflansch einen bestimmten Bewegungsablauf
einhalten muß, wie dies beispielsweise bei dem Bahnschweißen erforderlich ist. Bisher war es in diesen
Fällen erforderlich, das Bahnprogramm entsprechend dem
Gerät anzupassen, was ein aufwendiges Programmierverfahren vorort voraussetzt.

Theoretische Programmierung, wie sie sonst über CAP/CAM
durchgeführt wird, ist unmöglich, da die Ist-Werte der
Einzelglieder unbekannt sind.

Der Erfindung liegt die Aufgabe zugrunde, ein Verfahren
zum Erfassen und Kompensieren der Bahnabweichung eines
Industrieroboters zu schaffen, welches ein einfaches
und computergerechtes Anpassen des Bewegungsablaufes des
Werkzeugflansches eines Industrieroboters an veränderte
Gegebenheiten ermöglicht.

Erfindungsgemäß wird diese Aufgabe gelöst durch Darstellen einer Normbewegungsbahn des Werkzeugflansches
auf einer Fläche, Ausrichten eines auf den Werkzeugflansch montierten opto-elektronischen Sensors auf die
Fläche, Führen des Werkzeugflansches mit dem daran montierten opto-elektronischen Sensor entsprechend dem
vorgegebenen Soll-Bahnprogramm und Speichern der sich
als Abweichungen der Abbildung der dargestellten Soll-
Bewegungsbahn im opto-elektronischen Sensor von dessen
Mittelpunkt ergebenden Bahnabweichung des Werkzeugflansches.

Es kommen dabei verschiedene opto-elektronischen Sensoren in Betracht, vorzugsweise findet jedoch eine Diodenkamera Verwendung.

Die Sollbewegungsbahn kann auf die Fläche aufgedruckt oder aufgezeichnet sein, insbesondere auch kann ein Normierungs-Roboter, dessen Bewegungsbahn der Sollbewegungsbahn exakt entspricht, durch Versehen des Werkzeugflansches mit einem Schreibinstrument die Sollbewegungsbahn automatisch aufzeichnen.

Der Werkzeugflansch kann weiter mit einem Spotscheinwerfer versehen sein, welcher zusammen mit dem opto-elektronischen Sensor geführt ist und die Bewegungsbahn ausleuchtet.

Alternativ dazu kann die Sollbewegungsbahn jedoch auch mittels eines Diaprojektors auf die Fläche projeziert sein, dabei kann weiter vorgesehen sein, daß die Sollbewegungsbahn von hinten auf eine aus halbtransparentem Material bestehende Fläche projeziert wird.

Vorzugsweise ist vorgesehen, daß die Sollbewegungsbahn positiv oder negativ mittels monochromatischem Licht dargestellt wird, auf dessen Wellenlänge der opto-elektronische Sensor besonders empfindlich reagiert.

Eine bevorzugte Ausführungsform ist weiter dadurch gekennzeichnet, daß die Bahnlinie mittels eines Lichts dargestellt wird, dessen Wellenlänge außerhalb des Bereiches des sichtbaren Lichts liegt, um Umweltstöreinflüsse zu vermeiden.

In vielen Fällen ist es wünschenswert, daß auch der Geschwindigkeitsablauf, mit dem die Bewegungsbahn abgefahren wird, erfaßt und zum Zwecke der Kompensation weitergeleitet werden kann. Dies kann dadurch erreicht werden, daß die Sollbewegungsbahn mit einer sich regelmäßig in der Breite verändernden Strichstärke dargestellt wird, die Sollbewegungsbahn kann dabei als gepunktete oder gestrichelte Linie dargestellt sein.

Das dargestellte Verfahren kann weiter verwendet werden, um die dynamischen Eigenschaften, wie Totzeiten, Reaktionszeiten auf Sollsignale, Reversierspannungen, Schwingungen und dgl. zu erfassen, weiter kann dies Verfahren zu Kompensationszwecken herangezogen werden oder für Qualitätsanalyse oder Qualitätssicherungszwecke.

Die erfindungsgemäße Vorrichtung zeichnet sich durch eine Fläche aus, auf der die Sollbewegungsbahn aufgedruckt ist, und einen auf dem Werkzeugflansch des Industrieroboters montierten, auf die Fläche ausgerichteten opto-elektronischen Sensor; vorzugsweise handelt es sich bei dem opto-elektronischen Sensor um eine Diodenkamera.

Weitere Merkmale und Vorteile ergeben sich aus den Ansprüchen, der Beschreibung und der Darstellung, in der ein Ausführungsbeispiel dargestellt ist. Dabei zeigt:

Fig. 1 eine Anordnung zur Durchführung des erfindungsgemäßen Verfahrens;

Fig. 2    eine Anordnung zum Projezieren der
          Sollbewegungsbahn auf eine Fläche mittels eines Diaprojektors; und

Fig. 3    einen Lichtkasten, auf dem die Sollbewegungsbahn aufgebracht ist.

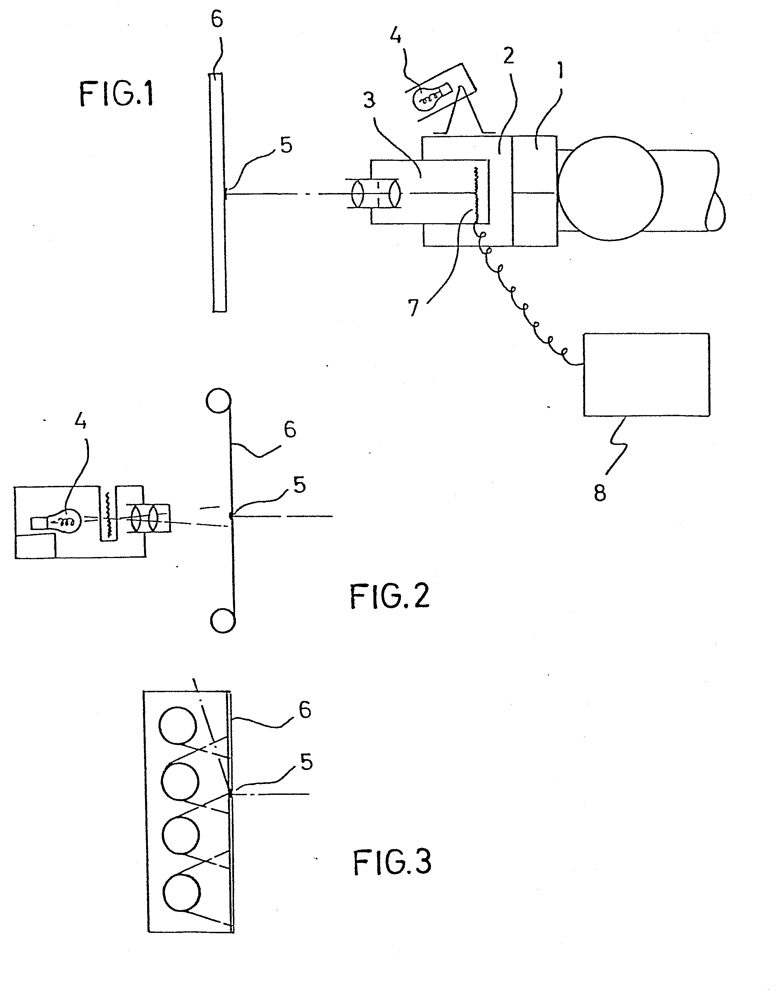

Figur 1 verdeutlicht eine auf dem Handgelenk 1 eines
Industrieroboters über einen Werkzeugflansch 2 anmontierte Diodenkamera 3. Weiter ist ein Scheinwerfer 4
erkennbar, der zusammen mit dem opto-elektronischen
Sensor 3 geführt wird. Opto-elektronischer Sensor 3 und
Scheinwerfer 4 sind auf eine Fläche 6 ausgerichtet, auf
der die Sollbewegungsbahn 5 dargestellt ist. Die Sollbewegungsbahn 5 wird also auf dem Diodenfeld 7 der Diodenkamera abgebildet, das Bild wird dabei elektronisch in
die Recheneinheit 8 geführt.

Figur 2 verdeutlicht, daß die Sollbewegungsbahn mittels
eines Diaprojektors von hinten auf die Fläche aufprojeziert werden kann, eine alternative Ausgestaltung zeigt
Figur 3, bei die Fläche auf einen Lichtkasten aufgebracht ist. Bei der in Figur 3 dargestellten Ausführungsform kann diese Sollbewegungskurve mittels eines
auf dem Werkzeugflansch 2 anmontierten Schreibinstrument aufgezeichnet worden sein, wobei der Industrieroboter exakt die Sollbewegungsbahn abgefahren ist.

Bei Durchführung des erfindungsgemäßen Verfahrens wird
der opto-elektronische Sensor 3 auf die Fläche 6 ausgerichtet, auf der die Sollbewegungsbahn dargestellt
ist. Ausgehend von einem Startpunkt wird der Werkzeugflansch samt des daran montierten opto-elektronischen Sensors entsprechend dem vorgegebenen Bewegungsprogramm
des Industrieroboters geführt; dabei wird der opto-
elektronische Sensor im wesentlichen der Sollbewegungsbahn folgen, wobei jedoch Abweichungen der tatsächlichen
Bewegungsbahn von der Sollbewegungsbahn festgestellt
werden können. Diese ergeben sich als Abweichungen der
Abbildung der Sollbewegungsbahn 5 von dem Mittelpunkt
des Diodenfeldes der Diodenkamera 3. Diese Abweichungen
werden über die Zeit festgestellt und von einer Recheneinheit 8 gespeichert. Diese Daten werden der Robotersteuerung dann zu Programmkorrekturzwecken zugeleitet.

Es ist bei Durchführung des erfindungsgemäßen Verfahrens
also möglich, die jeweiligen Abweichungen der Istbewegungsbahn von der Sollbewegungsbahn über die Zeit festzustellen, es versteht sich, daß diese Daten entweder
zur einmaligen Korrektur des Bewegungsprogramms verwendet werden können, oder aber dem ausgelesenen Programm
jeweils zur Korrektur aufaddiert werden können.

Das erfindungsgemäße Verfahren ermöglicht es also, auf
überraschend einfache Weise Abweichungen von der Sollbewegungsbahn zu erfassen und zu korrigieren, wobei ein
Neuprogrammieren des Bewegungsprogramms nicht erforderlich ist. Weiterhin ist damit die theoretische Programmierung möglich, da die Toleranzen des Robotereinzelgerätes erfaßt und den theoretischen Programmierdaten
aufaddiert werden können.

Das erfindungsgemäße Verfahren ist nicht auf das Korrigieren der Bahnabweichung beschränkt, es kann in entsprechender Weise verwendet werden, um Schwingungsanalysen durchzuführen, indem die Abweichungen von einem Normalpunkt auf der Fläche 5 über die Zeit dargestellt werden. Weiter kann dieses Verfahren auch genutzt werden bei dem Qualitätsnachweis und der Endabnahme eines Industrieroboters.

In den Fällen, in den weiter eine Geschwindigkeitsmessung erforderlich ist, kann dies dadurch erreicht werden, daß die Meßkurve regelmäßig in der Strichstärke verändert wird. Dabei kann die Sollbewegungsbahn keilförmig dargestellt sein oder aber in Form einer spiegelsymmetrischen Doppel-Sinuskurve. Dabei ist dann jeweils automatisch die Mittellinie dieser Kurve zu ermitteln. Es kommt alternativ in Betracht, die Sollbewegungsbahn mittels einer gestrichelten oder gepunkteten Linie darzustellen.

Die in der vorstehenden Beschreibung, den Ansprüchen und der Zeichnung offenbarten Merkmale der Erfindung können sowohl einzeln als auch in beliebiger Kombination für die Ausführung der Erfindung in ihren verschiedenen Ausgestaltungen wesentlich sein.

A n s p r ü c h e
==================

1. Verfahren zum Erfassen und Kompensieren der Bahnabweichung eines Industrieroboters, gekennzeichnet durch
Darstellen einer Normbewegungsbahn des Werkzeugflansches
auf einer Fläche, Ausrichten eines auf den Werkzeugflansch montierten opto-elektronischen Sensors auf die
Fläche, Führen des Werkzeugflansches mit dem daran montierten opto-elektronischen Sensor  entsprechend dem
vorgegebenen Soll-Bahnprogramm und Speichern der sich
als Abweichungen der Abbildung der dargestellten Sollbewegungsbahn im opto-elektronischen Sensor von dessen
Mittelpunkt ergebenden Bahnabweichung des Werkzeugflansches.

2. Verfahren zum Erfassen und Kompensieren der Bahnabweichung eines Industrieroboters nach Anspruch 1, dadurch gekennzeichnet, daß als opto-elektronischer Sensor
eine Diodenkamera Verwendung findet.

3. Verfahren zum Erfassen der Bahnabweichung eines Industrieroboters nach Anspruch 1 oder 2, dadurch gekennzeichnet, daß die Sollbewegungsbahn auf der Fläche aufgezeichnet oder aufgedruckt ist.

4. Verfahren zum Erfassen der Bahnabweichung eines Industrieroboters nach Anspruch 3, dadurch gekennzeichnet, daß auf dem Werkzeugflansch weiter ein koaxial mit dem opto-elektronischen Sensor geführter Spotscheinwerfer montiert ist.

5. Verfahren zum Erfassen der Bahnabweichung eines Industrieroboters nach Anspruch 1 oder 2, dadurch gekennzeichnet, daß die Sollbewegungsbahn mittels eines Diaprojektors auf die Fläche projeziert wird.

6. Verfahren zum Erfassen der Bahnabweichung eines Industrieroboters nach Anspruch 5, dadurch gekennzeichnet, daß die Sollbewegungsbahn von hinten auf eine aus halbtransparentem Material bestehende Fläche projeziert wird.

7. Verfahren zum Erfassen der Bahnabweichung eines Industrieroboters nach einem oder mehreren der vorangehenden Ansprüche, dadurch gekennzeichnet, daß die Sollbewegungsbahn positiv oder negativ mittels monochromatischem Licht dargestellt wird, auf dessen Wellenlänge opto-elektronische Sensoren besonders empfindlich reagieren.

8. Verfahren zum Erfassen der Bahnabweichung eines Industrieroboters nach einem oder mehreren der vorangehenden Ansprüche, dadurch gekennzeichnet, daß die Bahnlinie mittels eines Lichts dargestellt wird, dessen
Wellenlänge außerhalb des Bereiches des sichtbaren
Lichts liegt.

9. Verfahren zum Erfassen der Bahnabweichung eines Industrieroboters nach einem oder mehreren der vorangehenden Ansprüche, dadurch gekennzeichnet, daß die Sollbewegungsbahn mit einer sich regelmäßig in der Breite
verändernden Strichstärke dargestellt wird.

10. Verfahren zum Erfassen der Bahnabweichung eines Industrieroboters nach einem oder mehreren der vorangehenden Ansprüche, dadurch gekennzeichnet, daß die Sollbewegungsbahn als gepunktete oder gestrichelte Linie
dargestellt wird.

11. Vorrichtung zum Erfassen der Bahnabweichung eines
Industrieroboters, gekennzeichnet durch eine Fläche
(6), auf der die Sollbewegungsbahn (5) des Werkzeugflansches (2) aufgezeichnet oder aufgedruckt ist, und
eine auf dem Werkzeugflansch (2) des Industrieroboters
montierte, auf die Fläche (6) ausgerichteten opto-
elektronischen Sensor (3).

12. Vorrichtung zum Erfassen der Bahnabweichung eines
Industrieroboters, dadurch gekennzeichnet, daß es sich
bei dem opto-elektronischen Sensor um eine Diodenkamera
handelt.

FB 709
0120197

FIG.1

FIG.2

FIG.3

Europäisches
Patentamt

# EUROPÄISCHER RECHERCHENBERICHT

| EINSCHLÄGIGE DOKUMENTE | | | EP 84100474.0 |
|---|---|---|---|

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| A | US - A - 3 795 054 (KINNEY)<br>  * Fig. 1,2; Spalte 1, Zeilen<br>   14-20; Spalte 4, Zeile 32 -<br>   Spalte 5, Zeile 40 *<br>      --<br>PATENT ABSTRACTS OF JAPAN, unexa-<br>mined applications, Sektion M,<br>Band 1, Nr. 109, 24. September<br>1977<br>THE PATENT OFFICE JAPANESE GOVERN-<br>MENT<br>Seite 3309, M 77 | 1 | B 25 J 19/00 |
| A |   * Kokai-Nr. 52-47 264<br>    (HITACHI) * | 1,2 | |
| X | | 12 | |
| A |       --<br>GB - A - 1 518 244 (BENDIX)<br>  * Fig. 1,2; Seite 2, Zeile<br>   116 - Seite 4, Zeile 89 *<br>      ---- | | |

**RECHERCHIERTE SACHGEBIETE (Int. Cl. ³)**

B 25 J  9/00

B 25 J 13/00

B 25 J 19/00

B 65 G 47/00

G 05 D  3/00

G 05 B 19/00

Der vorliegende Recherchenbericht wurde für alle Patentansprüche erstellt.

| Recherchenort | Abschlußdatum der Recherche | Prüfer |
|---|---|---|
| WIEN | 28-05-1984 | DRÖSCHER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, überein-
    stimmendes Dokument

EPA Form 1503. 03.82